# EUROPEAN PATENT SPECIFICATION

(11) **EP 3 578 047 B1**
(45) Date of publication and mention of the grant of the patent: **28.09.2022**
(21) Application number: 18176620.5
(22) Date of filing: 07.06.2018
(51) Int. Cl.: A01P 21/00, A01N 27/00, A01N 37/42, A01N 57/20

(54) **PLANT GROWTH REGULATOR SYSTEM**
PFLANZENWACHSTUMSREGULATORSYSTEM
SYSTÈME DE RÉGULATION DE CROISSANCE VÉGÉTALE

(43) Date of publication of application: 11.12.2019
(73) Proprietor: Fine Agrochemicals Limited, Worcester WR5 2RQ (GB)
(72) Inventor: WIKELEY, Philip Simon, Malvern, Worchester WR14 1PG (GB); SCOTT, Graham Vaughan, Bristol BS40 8SX (GB); REIGNARD, Joëlle, Meyzieu 69330 (FR)
(74) Representative: Hoyng Rokh Monegier B.V.

(56) References cited:
- EP-A2- 0 344 533
- WO-A1-2005/015997
- JOHN CLINE ET AL: "Prohexadione-calcium, ethephon, trinexapac-ethyl and maleic hydrazide reduce extension shoot growth of apple", CANADIAN JOURNAL OF PLANT SCIENCE, 29 November 2016 (2016-11-29), XP055495597, CA ISSN: 0008-4220, DOI: 10.1139/CJPS-2016-0106
- JOHN CLINE: "Prohexadione-Ca and Ethephon Suppress Shoot Growth of Sweet Cherries (P. Avium)", CANADIAN JOURNAL OF PLANT SCIENCE, 21 January 2017 (2017-01-21), XP055495600, CA ISSN: 0008-4220, DOI: 10.1139/CJPS-2016-0271
- D.C. ELFVING ET AL: "EFFECTS OF PROHEXADIONE-CALCIUM AND ETHEPHON ON GROWTH AND FLOWERING OF 'BING' SWEET CHERRY", ACTA HORTICULTURAE, no. 667, 1 February 2005 (2005-02-01), pages 439-446, XP055495615, BE ISSN: 0567-7572, DOI: 10.17660/ActaHortic.2005.667.63

## Description

### Field of the invention

The invention relates to a plant growth regulator system and to a method to treat plants with said system. Furthermore, the invention relates to use of said plant growth regulator system in crops, preferably broad acre crops like rape seed oil, flax and cereal crops.

### Background of the invention

In many horticultural and agricultural applications, plant growth regulators (growth inhibitors or growth stimulants) are applied for a variety of reasons. For example, it can be useful to increase the speed of growth, increase root formation, seedling setting and the like. It may also be useful to reduce growth in order to have short stems in grain culturing, reduce risk of lodging avoiding yield loss, seed formation in citrus fruits and the like.

Many of the plant growth regulators, insecticides, fungicides, herbicides and the like are applied on the crop by spraying, in a diluted solution in water.

Generally, the farmer appreciates to use concentrated products, like liquid formulations that can easily be admixed with water to result in homogeneous mixtures without additional process steps. Furthermore, often, a farmer wants to apply several active compounds in one spray run.

CN103814901 and WO2015//024995 for example suggest to combine prohexadione with other active compounds in agricultural treatments.

EP 0344533 discloses a plant growth regulating composition comprising a member selected from the group consisting of 3,5-dioxo-4-propionylcyclohexane carboxylic acid and its esters and salts; at least one compound selected from the group consisting of (2-chloroethyl) phosphonic acid, 1,1-dimethylpiperidinium chloride and 2-chloroethyl-trimethylammonium chloride; and an agricultural carrier or diluent.

It is an object of the invention to provide a method for treating plants with an improved plant growth regulator system.

It is furthermore an object of the invention to provide an improved plant growth regulator system with enhanced efficacy for agricultural use.

### Summary of the invention

The plant growth regulator system of the present invention comprises a synergistic combination of prohexadione and ethephon.

The invention provides for a method for treating plants, wherein a water based spraying liquid is sprayed on plants, wherein the liquid comprises water and suitable amounts of prohexadione and ethephon, wherein the amount of prohexadione is between 20 and 200 gram per hectare, and wherein the amount of ethephon is between 100 and 325 gram per hectare.

The plants are preferably broad acre crops chosen from rape, flax or cereal, and if the crop is cereal, preferably, the cereal is chosen from barley, oat, wheat, rye, triticale, grain or corn, and more preferably barley or wheat. Most preferably, the crop is rape seed.

Further, a water based spraying liquid is provided, comprising prohexadione and ethephon as defined above.

Unexpectedly, the combination of a plant growth regulator that acts on the gibberellic acid pathway by virtue of mimicking 2-glutaric acid (and thereby interfering with the late steps of GA synthesis), combined with ethephon, which liberates ethylene, shows a synergistic effect in length retardation, and thereby allowing more energy in the plants to be used for leaves and seeds. Enhanced growth control reduces the risk of lodging, and reduces yield losses. It was in particular observed that relatively low, hardly effective amounts of ethephon, if used by itself, were very effective in creating synergy when used in combination with prohexadione.

In one embodiment of the disclosure, the at least two actives are supplied to a farmer in separate concentrated products. In this embodiment, the at least two actives preferably are provided as kit of parts, preferably with instructions how to use both compounds in the method according to the present invention.

In another embodiment of the disclosure, the two actives are supplied in one formulation, simplifying the application by the farmer. This formulation can take several forms, such as dispersible or dissolvable granules, liquid dispersion, solutions and the like.

The invention further relates to the combined use of ethephon and prohexadione to enhance the growth regulation effect of either active alone.

### Detailed description of the invention

The invention provides a method for treating plants with at least prohexadione and ethephon, wherein a water based spraying liquid is sprayed on plants, wherein the liquid comprises water and suitable amounts of prohexadione and ethephon, wherein the amount of prohexadione is between 20 and 200 g per hectare and wherein the amount of ethephon is between 100 and 325 g per hectare.

The method according the invention is preferably used on broad acre crops. The method according the invention is preferably used on rape (*Brassic napus*), flax (linseed) or cereal crops.

If the crop is cereal, the cereal is preferably chosen from barley, oat, wheat, rye, triticale, grain or corn, preferably barley or wheat.

Most preferred crop is rape seed, which belong to the plant genus *Brassica* and include *Brassica napus* comprising winter rapeseed, summer rapeseed, and several mustard species. *Brassica napus* is most preferred.

In the method according to the invention the water based spraying liquid is sprayed on plants in an amount of about 30 L to about 1000 L per hectare, preferably about 100 L to 500 L per hectare.

Preferably, prohexadione is applied in an amount between 50 and 200 g per hectare.

Preferably, ethephon is applied in an amount of between 150 and 325 g per hectare.

In a preferred embodiment, the ratio between prohexadione and ethephon is between 1:1 to 1:20, preferably 1:2 to 1:10.

The plant growth regulator system may be applied once or several time during the growth phase of the plants.

Preferably, the prohexadione comprises prohexadione-calcium, more preferably, the prohexadione is prohexadione calcium.

Prohexadione (preferably used as prohexadione-Ca-salt) can be supplied as granules, as for example described in WO2011/012495.

Preferably, prohexadione-Ca-salt is used as a liquid, oil based dispersion, as described in WO2015/024995.

Ethephon can be supplied as liquid concentrates or other forms, commercially available, such as for example FAL1406 of Fine Agrochemicals Ltd., Ethrel^{®}, Etheverse^{®}, or Cerone^{®} all of Bayer.

As shown in the examples, the combination of prohexadione and ethephon provides for an unexpected synergistic reduction in stem length (shoot).

Hence, the invention in particular provides a water based spraying liquid, wherein prohexadione and ethephon are used in such amounts that a synergistic effect on stem length retardation is achieved.

The invention in furthermore provides a water based spraying liquid, wherein prohexadione and ethephon are used in such amounts that a synergistic effect on reduction of lodging is achieved.

The invention in furthermore provides a water based spraying liquid, wherein prohexadione and ethephon are used in the amounts as described in claim 1, which are such amounts that a synergistic effect on internode distance reduction is achieved.

The reduced stem length decreases the risk lodging, increases yield because of less, or less severe lodging and because more energy is available for seed production. The stem length reduction is often visible by reduced distance between nodes, which also increases the density of the plant and the strength of the plant.

According to the plant type, the growth-regulating action may therefore be manifested in different effects. These include the limitation of shoot growth, the promotion of root growth, a yield increase through redistribution of assimilates from the shoots into the growing grains or seeds etc.

In the case of rape seed, flax or cereals, a shortened stem length, or shoot, reduces risk of lodging of the plants (the stems bending over or even stems breaking). This improves the harvestability and reduces the infection risk through soil bacteria. Since lodging generally also leads to a deterioration in the grain or seed quality (e.g. poorer ratio of starch to protein content in grain and/or lower grain or seed weight), a shortened shoot also leads to an improvement in the grain or seed quality.

The invention also relates to the use of ethephon and prohexadione in combination, to enhance the growth regulation effect of either active alone, wherein the amount of prohexadione is lower than 200 g/ha, and wherein the amount of ethephon is 325 g/ha or less.

Ethephon and prohexadione can be applied to the plants in a mixture or separately. In the case of separate application, the individual active substances can be applied simultaneously or successively, though, in the latter case, the individual components should be applied within a short period of time, preferably within a period of time of a few seconds or a few minutes, for example 1, 2 or 3 minutes, or several hours, like 2-5 hours (i.e. on the same day), up to a few days, for example 2 or 3 days. Preference is given, however, to combined application or application within a day, more preferably combined application.

The spraying liquid for use in the method according to the invention may contain further additionally, one or more plant growth regulators, fungicides, metal compounds, penetrating agents and/or one or more jasmonates.

For example, in particular relating to *gramineae* (cereal crop), it may be preferred to use next to prohexadione, also trinexapac-ethyl as growth regulator, in combination with ethephon. The relative amounts of prohexadion and trinexapac preferably are about 1:5 to 5:1.

In a preferred embodiment, the spraying liquid comprises additional active compounds or additives. For example, such additional active compound is preferably delivered to the farmer as concentrated solution or dispersion, such that these can be mixed directly in the spray tank. Hence, additives or additional active components, to be used in combination with prohexadione and ethephon can be added directly to the water phase.

In case a prohexadione salt is used, an ammonium salt such as for example ammoniumsulphate, and an acid such as for example a carboxylic acid, such as for example citric acid, adipic acid, acetic acid or the like can be added to the water phase, but may also be part of the concentrated prohexadione formulation, such as for example an oil dispersion.

The spraying liquid preferably also comprises emulsifiers and the like, penetration enhancers etc., like for example an aliphatic amine compound, such as for example N,N-dimethyl decanamide or N-decyl-N-methyl- formamide. The amount of penetration enhancer can be about 0.3 to 20 times the amount of active components (prohexadione plus ethephon), preferably 1-5 times the amount of active components.

The spraying liquid may further comprise additional growth regulators. Preferred additional growth regulators include one or more of trinexapac-ethyl, chlormequat, mepiquat, gibberellins, imazaquin, an auxin and/or cytokinin.

Suitable auxins include natural or synthetic chemicals that behave like the naturally occurring auxins produced by plant enzyme systems, and the term "auxin" and "auxins" as used herein refers to such compounds in natural and synthetic form. Indoleacetic acids, indol-3-butyric acid (3-BA); naphthaleneacetamide; 2 methyl-1-naphthaleneacetic acid and 2-methyl-1-naphthylacetamide have hormonal activity and may be substituted for the naturally occurring auxins. It may be useful to have metal ions present with the auxins, such as for example zinc or manganese. In preferred embodiments, the auxin employed is selected from the group consisting of 3-indolebutyric acid, 3-indoleacetic acid, 1-naphthylacetic acid, 3-indolebutyric acid, and salts and esters thereof. Preferably, the metal ions required for a good activity are supplied together with the auxin.

Suitable cytokinins are a class of plant regulation substances (phytohormones) that promote cell division, or cytokinesis, in plant roots and shoots. There are two types of cytokinins: adenine-type cytokinins represented by kinetin, zeatin, and 6-benzylaminopurine (also referred to as BAP, 6-BAP, or 6-benzyladenine), and phenylurea-type cytokinins like diphenylurea and thidiazuron (TDZ). In preferred embodiments the cytokinin is selected from the group consisting of kinetin (synthetic or derived from seaweed), 6-BAP, 1-(2-chloropyridin-4-yl)-3-phenylurea (CPPU), and TDZ.

Suitable additional compounds include specific anti powdery mildew fungicides such as morfolines like fenpropidine and fenpropimorf, metrafenone, cyflufenamide, quinoxyfen and proquinazid; SBI fungicides like triazoles like epoxyconazol, prothioconazole, metconazole, difenoconazole, paclobutrazole, triconazole, tebuconazole; Strobilurines (Qol fungicides) like coumoxystrobin, dimoxystrobin, enoxastrobin, famoxadone, fenamidone, fenaminostrobin, fluoxastrobin, flufenoxystrobin, kresoxim-methyl, metominostrobin, orysastrobin, pyraoxystrobin, pyraclostrobin, pyrametastrobin, azoxystrobin, picoxystrobin,pyribencarb, triclopyricarb trifloxystrobin and SDHI like fungicides like benodanil, bixafen, carboxin, fenfuram, fluopyram, flutolanil, fluxapyroxad, furametpyr, isopyrazam, mepronil, oxycarboxin, penflufen, penthiopyrad, sedaxane and thifluzamid, or boscalid and/or penthiopyrad.

Suitable further compounds that can be added are jasmonates or phosphonic acid, which strengthen the defence mechanisms of the plants. Suitable jasmonates include methyl jasmonate, propyldihydrojasmoante and jasmonic acid.

Suitable further compounds that can be added are metal compounds, such as for example zinc, manganese, selenium, iron copper, boron, molybdenum, and magnesium and the like. The metal ions can be used as chelates or salts, like for example EDTA chelates, citrate salts, proteinates or otherwise in a form that the metals are absorbed by the plant leafs.

The disclosure is also providing a kit of parts suitable for preparing the spraying liquid for use in the invention, wherein prohexadione is provided in a first concentrated form, and ethephon is provided in a second concentrated form, wherein the relative amounts of actives in the kit is adapted, optionally by reference to a instruction sheet, to provide the amounts described above.

The disclosure also provides a composition, preferably granular composition, comprising
- at least prohexadione;
- at least ethephon;
- wherein the amount of prohexadione is about 4 wt% or more and about 20 wt% or less, and the amount of ethephon is about 5 wt% or more and about 50 wt% or less
- optionally at least one of a binder, a dispersion agent, and anticacking agent.

Such a composition is a convenient way to provide the at least both actives together. Many formulations for liquid or solid compositions are known. Granular compositions are for example described in WO2002/829902 and WO2015/038917.

The water based spraying liquid comprises water and a suitable amount of liquid and/or solid compositions.

Further, other additives, actives etc. may be present, which can be separately mixed with the water.

A suitable dilution comprises about 96 wt% water or more and about 4 wt% of said concentrated composition or less. Preferably, the concentrated composition is diluted with water in a range of about 1:50 to 1:500 (in volume/volume). Suitable amounts of concentrated composition in water include 0.2 wt%, 0.5 wt%, 1 wt% and 1.5 wt%.

### Examples

The results below show that the length of the rapeseed plants and of cereals like barley or wheat was reduced more, than the additive effect of the two actives separately applied. Very substantial synergistic effects in the order of an additional about 30% to more than 200% were observed.

Efficacies of active ingredient combinations are more precisely determined, for example, by the Colby formula (S. R. Colby, Calculating Synergistic and Antagonistic Response of Herbicide Combinations, Weeds, 15, p. 20-22), also used below.

Lodging was assessed according to the following scale:

| | |
|---|---|
| Class 0 | no lodging |
| Class 1 | % of plot surface with stems leaning with a 5-25° angle |
| Class 2 | % of plot surface with stems leaning with a 25-45° angle |
| Class 3 | % of plot surface with stems leaning with a 45-65° angle |
| Class 4 | % of plot surface with stems leaning with a 65-85° angle |
| Class 5 | % of plot surface with stems lying on the ground (90° angle) |

### Examples A-F and 1-2

In the following examples, FAL2023 was used, comprising 5 wt% prohexadione-Ca as active ingredient in an oil based dispersion, and prepared in accordance with WO-2015/024995. As ethephon FAL1406 was used, comprising 720 g/L ethephon in water. The weight ratio of prohexadion to ethephon is about 4.3.

Rape seed was sprayed with a volume of 200 L/hectare, in April, and assessment was done on 3 May and on another plot on 16 May with compounds as shown in the following tables. The tables also includes the results.

| Example | A | B | C | 1 |
|---|---|---|---|---|
| Treatment | | | | |
| Prohexadion-Ca (g/ha) | - | 75 | - | 75 |
| Ethephon (g/ha) | - | - | 325 | 325 |
| Height on 3 May (cm) | 99.0 | 96.3 | 97.3 | 83.6 |
| Length reduction (cm) | | 2.7 | 1.7 | 15.4 |
| Length reduction over two actives separately (cm) and additional reduction over additive effect (%) | | | | 11.0 |
| | | | | 250% |

| Example | D | E | F | 2 |
|---|---|---|---|---|
| Treatment | | | | |
| Prohexadion-Ca (g/ha) | - | 75 | - | 75 |
| Ethephon (g/ha) | - | - | 325 | 325 |
| Height on 16 May (cm) | 130.7 | 117.8 | 128.2 | 107.8 |
| Length reduction (cm) | | 12.9 | 2.5 | 22.9 |
| Length reduction over two actives separately (cm) and additional reduction over additive effect (%) | | | | 7.5 |
| | | | | 49% |

Colby calculations on the two plots, on results of two different days shows the results in the following Table:

| Treatment | 1A | 1B | 2A | 2B |
|---|---|---|---|---|
| Date of assessment: | 16/05/2016 | 25/06/2016 | 03/05/2016 | 23/05/2016 |
| | Reduction relative to untreated | | | |
| FAL2023 1.5 L/ha (B/E) | 9.89 | 13.04 | 2.63 | 1.45 |
| FAL1406 0.45 L/ha (C/F) | 1.85 | 5.73 | 1.62 | 2.50 |
| FAL2023 1.5 L/ha + FAL1406 0.45 L/ha (1/2) | 17.48 | 21.30 | 15.56 | 5.14 |
| Colby of additive effect | 11.56 | 18.02 | 4.20 | 3.91 |

The Colby additive effect of the individual treatments is each time lower than the actual length reduction (efficacy) of the combination, showing the presence of a synergistic effect.

### Examples G-I and 3

In the following examples, FAL2023 was used as source of prohexadione. As ethephon Etheverse^{®} was used, comprising 480 g/L ethephon in water.

Barley was sprayed with a volume of 200 L/hectare in April, and assessment was done on 9 May with compounds as shown in the following table. The table also includes the results.

| Example | G | H | I | 3 |
|---|---|---|---|---|
| Treatment | | | | |
| Prohexadion-Ca (g/ha) | - | 50 | - | 50 |
| Ethephon (g/ha) | - | - | 202 | 202 |
| Height (cm) | 99.2 | 92.5 | 95.0 | 85.2 |
| Length reduction (cm) | | 6.7 | 4.2 | 14.0 |
| Length reduction over two actives separately (cm) and additional reduction over additive effect (%) | | | | 3.1 |
| | | | | 28% |

The improvement according to the Colby calculation was 14.1 for the combination versus 10.7 of the additive effect of the individual treatments.

### Examples J-L and 4

In the following examples, FAL2023 was used as source of prohexadione. As ethephon Etheverse^{®} was used.

Another plot of barley was sprayed with a volume of 200 L/hectare, on 11 May with compounds as shown in the following table. The table also includes the results.

| Example | J | K | L | 4 |
|---|---|---|---|---|
| Treatment | | | | |
| Prohexadion-Ca (g/ha) | - | 50 | - | 50 |
| Ethephon (g/ha) | - | - | 202 | 202 |
| Height (cm) | 104.2 | 91.1 | 102.6 | 79.8 |
| Length reduction (cm) | | 13.1 | 1.6 | 24.4 |
| Length reduction over two actives separately (cm) and additional reduction over additive effect (%) | | | | 9.7 |
| | | | | 66% |

The improvement according to the Colby calculation was 23.4 for the combination versus 13.9 of the additive effect of the individual treatments.

Lodging was assessed as well, showed in the following table:

| | 4A | 4B | 4C |
|---|---|---|---|
| Lodging assessment | 11/05/2018 | 16/05/2018 | 28/05/2018 |
| Untreated (J) | 2 | 18.3 | 22 |
| FAL2023 1 L/ha (K) | 0.5 | 3 | 5.3 |
| Etheverse 0.42 L/ha (L) | 5.5 | 16.3 | 17.5 |
| FAL2023 1 L/ha + Etheverse 0.42 L/ha (4) | 0 | 0 | 0 |
| Colby calculations | | | |
| FAL2023 1 L/ha (K) | 75.00 | 83.61 | 75.91 |
| Etheverse 0.42 L/ha (L) | -175.00 | 10.93 | 20.45 |
| FAL2023 1 L/ha + Etheverse 0.42 L/ha | 100 | 100 | 100 |
| COLBY of additive effect | 31.25 | 85.40 | 80.84 |

The combined use of prohexadione and ethephon reduced lodging to 0, while the Colby-calculated additive effect from the individual treatments was substantially less.

### Examples M-O and 5

In the following examples, FAL2023 was used as source of prohexadione. As ethephon Cerone^{®} was used, comprising about 480 g/L ethephon in water.

A plot of winter barley was sprayed with a volume of 150 L/hectare on 23 April, assessment was done on 7 May with compounds as shown in the following table. The table also includes the results.

| Example | M | N | O | 5 |
|---|---|---|---|---|
| Treatment | | | | |
| Prohexadion-Ca (g/ha) | - | 50 | - | 50 |
| Ethephon (g/ha) | - | - | 202 | 202 |
| Height (cm) | 86.0 | 81.5 | 80.3 | 68.1 |
| Length reduction (cm) | | 4.5 | 5.7 | 17.9 |
| Length reduction over two actives separately (cm) and additional reduction over additive effect (%) | | | | 7.7 |
| | | | | 75% |

The improvement according to the Colby calculation was 20.8 for the combination versus 11.6 of the additive effect of the individual treatments. On 16 May a further height assessment was done, the Colby additive effect was only 5.0, while the combination showed an improvement of 12.6.

Lodging was determined on three dates, as shown in the following table

| | 5A | 5B | 5C |
|---|---|---|---|
| Lodging assessment | 16/05/2018 | 24/05/2018 | 31/05/2018 |
| Untreated (M) | 57.5 | 61.75 | 54 |
| FAL2023 1 L/ha (N) | 35.75 | 60.25 | 57.5 |
| Cerone 0.42 L/ha (O) | 4 | 45.75 | 53.5 |
| FAL2023 1 L/ha + Cerone 0.42 L/ha (5) | 0 | 0 | 36 |
| Colby calculations | | | |
| FAL2023 1 L/ha (N) | 37.83 | 2.43 | -6.48 |
| Cerone 0.42 L/ha (O) | 93.04 | 25.91 | 0.93 |
| FAL2023 1 L/ha + Cerone 0.42 L/ha (5) | 100.00 | 100.00 | 33.33 |
| COLBY of additive effect | 95.67 | 27.71 | -5.50 |

Lodging was substantially reduced in the plots on which the combination was applied.

### Examples P-R and 6

In the following examples, FAL2023 was used as source of prohexadione. As ethephon Cerone^{®} was used.

Another plot of winter barley was sprayed with a volume of 200 L/hectare, on 23 April. Assessment was done on 9 May with compounds as shown in the following table. The table also includes the results.

| Example | P | Q | R | 6 |
|---|---|---|---|---|
| Treatment | | | | |
| Prohexadion-Ca (g/ha) | - | 50 | - | 50 |
| Ethephon (g/ha) | - | - | 202 | 202 |
| Height (cm) | 98.3 | 93.3 | 95.0 | 84.6 |
| Length reduction (cm) | | 5.0 | 3.3 | 13.7 |
| Length reduction over two actives separately (cm) and additional reduction over additive effect (%) | | | | 5.4 |
| | | | | 65% |

The improvement according to the Colby calculation was 14.0 for the combination versus 8.3 of the additive effect of the individual treatments.

The internode distance was determined at 18 May, of which the results are shown in the next table.

| | 6A | 6B | 6C |
|---|---|---|---|
| Internode assessment | 1st internode | 2nd internode | 3rd internode |
| Untreated (P) | 14.18 | 16.11 | 18.68 |
| FAL2023 1 L/ha (Q) | 14.2 | 15.73 | 18 |
| Cerone 0.42 L/ha (R) | 14.5 | 16.12 | 18.19 |
| FAL2023 1 L/ha + Cerone 0.42 L/ha (6) | 13.78 | 13.09 | 15.12 |
| Colby calculation | | | |
| FAL2023 1 L/ha (Q) | -0.14 | 2.36 | 3.64 |
| Cerone 0.42 L/ha ^{®} | -2.26 | -0.06 | 2.62 |
| FAL2023 1 L/ha + Cerone 0.42 L/ha (6) | 2.82 | 18.75 | 19.06 |
| COLBY of additive effect | -2.40 | 2.30 | 6.17 |

These results that the synergistic stem length reduction was visible on all internode distances.

### Examples S-U and 7

In the following examples, FAL2023 was used as source for prohexadione. As ethephon Cerone^{®} was used,

Winter wheat was sprayed with a volume of 150 L/hectare, on 17 April. Assessment was done on 11 May with compounds as shown in the following table. The table also includes the results.

| Example | S | T | U | 7 |
|---|---|---|---|---|
| Treatment | | | | |
| Prohexadion-Ca (g/ha) | - | 50 | - | 50 |
| Ethephon (g/ha) | - | - | 202 | 202 |
| Height (cm) | 67.9 | 65.0 | 68.5 | 62.6 |
| Length reduction (cm) | | 2.9 | -0.6 | 5.3 |
| Length reduction over two actives separately (cm) and additional reduction over additive effect (%) | | | | 3.0 |
| | | | | 130% |

The improvement according to the Colby calculation was 7.9 for the combination versus 3.5 of the additive effect of the individual treatments. On 31 May a further height assessment was done, the Colby additive effect was only 0.4, while the combination showed an improvement of 3.8.

The results show that relatively low amounts of ethephon are effective in this synergistic combination. The reduced stem length reduces the risk of lodging.

## Claims

1. Method for treating broad acre crop with at least prohexadione and ethephon, wherein a water based spraying liquid is sprayed on plants, wherein the liquid comprises water and suitable amounts of prohexadione and ethephon,
- wherein the amount of prohexadione is between 20 and 200 g/ha, and
- wherein the amount of ethephon is between 100 and 325 g/ha.

2. Method according to claim 1, wherein the broad acre crop is chosen from rape seed, flax or cereal crops.

3. Method according to claim 2, wherein, if the crop is cereal, the cereal is chosen from barley, oat, wheat, rye, triticale, grain or corn.

4. Method according to claim 2, wherein the crop is rape seed.

5. Method according to any one of claims 1-4, wherein the amount of prohexadione is between 50 and 200 g/ha.

6. Method according to any one of claims 1-5, wherein the amount of ethephon is between 150 and 325 g/ha.

7. Method according to any one of claims 1-6, wherein the weight ratio between prohexadione and ethephon is between 1:1 to 1:20, preferably 1:2 to 1:10.

8. Method according to any one of claims 1-7, wherein an amount of spraying liquid of about 30 L to about 500 L is sprayed per hectare, preferably 100L - 500L per hectare.

9. Method according to any one of claims 1-8, wherein the spraying liquid further comprises one or more plant growth regulators, fungicides, metal compounds, penetrating agents, and/or jasmonates.

10. Method according to any one of claims 1-9, wherein the spraying liquid further comprises at least one of an aliphatic amino compound, an ammonium salt or a carboxylic acid.

11. Water based spraying liquid suitable for the method according to any one of claims 1-10, wherein the liquid comprises water and suitable amounts of prohexadione and of ethephon as described in claim 1, and/or one or more other limitation as described in any one of claims 5-10.

12. Use of ethephon and prohexadione in combination to enhance the plant growth regulation effect of either active alone in broad acre crop, wherein the amount of prohexadione is lower than 200 g/ha, and wherein the amount of ethephon is 325 g/ha or less.

13. Plant growth regulator system suitable for broad acre crop, comprising a synergistic combination of prohexadione and ethephon, wherein the applied amount of prohexadione is lower than 200 g/ha and the amount of ethephon is 325 g/ha or less.

## Patentansprüche

1. Verfahren zum Behandeln von Ackerkulturen mit mindestens Prohexadion und Ethephon, wobei eine Sprühflüssigkeit auf Wasserbasis auf Pflanzen gesprüht wird, wobei die Flüssigkeit Wasser und geeignete Mengen von Prohexadion und Ethephon umfasst,
- wobei die Menge von Prohexadion zwischen 20 und 200 g/ha beträgt und
- wobei die Menge von Ethephon zwischen 100 und 325 g/ha beträgt.

2. Verfahren nach Anspruch 1, wobei die Ackerkulturen aus Rapssaat, Flachs oder Getreide ausgewählt ist.

3. Verfahren nach Anspruch 2, wobei, wenn die Ackerkulturen Getreide sind, das Getreide aus Gerste, Hafer, Weizen, Roggen, Triticale, Korn oder Mais ausgewählt ist.

4. Verfahren nach Anspruch 2, wobei die Ackerkulturen Rapssaat sind.

5. Verfahren nach einem der Ansprüche 1 bis 4, wobei die Menge von Prohexadion zwischen 50 und 200 g/ha beträgt.

6. Verfahren nach einem der Ansprüche 1 bis 5, wobei die Menge von Ethephon zwischen 150 und 325 g/ha beträgt.

7. Verfahren nach einem der Ansprüche 1 bis 6, wobei das Gewichtsverhältnis zwischen Prohexadion und Ethephon zwischen 1 : 1 bis 1 : 20, vorzugsweise 1 : 2 bis 1 : 10, beträgt.

8. Verfahren nach einem der Ansprüche 1 bis 7, wobei eine Menge von Sprühflüssigkeit von etwa 30 l bis etwa 500 l pro Hektar gesprüht wird, vorzugsweise 100 l - 500 l pro Hektar.

9. Verfahren nach einem der Ansprüche 1 bis 8, wobei die Sprühflüssigkeit ferner einen oder mehrere Pflanzenwachstumsregulatoren, Fungizide, Metallverbindungen, Penetriermittel und/oder Jasmonate umfasst.

10. Verfahren nach einem der Ansprüche 1 bis 9, wobei die Sprühflüssigkeit ferner mindestens eines von einer aliphatischen Aminoverbindung, einem Ammoniumsalz oder einer Carbonsäure umfasst.

11. Sprühflüssigkeit auf Wasserbasis, geeignet für das Verfahren nach einem der Ansprüche 1 bis 10, wobei die Flüssigkeit Wasser und geeignete Mengen von Prohexadion und Ethephon umfasst, wie in Anspruch 1 beschrieben, und/oder eine oder mehrere andere Einschränkungen, wie in einem der Ansprüche 5 bis 10 beschrieben.

12. Verwendung von Ethephon und Prohexadion in Kombination, um die Pflanzenwachstumsregulationswirkung von beiden Wirkstoffen allein in Ackerkulturen zu verbessern, wobei die Menge von Prohexadion weniger als 200 g/ha beträgt und wobei die Menge von Ethephon 325 g/ha oder weniger beträgt.

13. Pflanzenwachstumsregulatorsystem, geeignet für Ackerkulturen, umfassend eine synergistische Kombination von Prohexadion und Ethephon, wobei die ausgebrachte Menge von Prohexadion weniger als 200 g/ha beträgt und die Menge von Ethephon 325 g/ha oder weniger beträgt.

## Revendications

1. Procédé de traitement d'une culture à grande échelle avec au moins du prohexadione et de l'éthéphon, dans lequel un liquide de pulvérisation à base d'eau est pulvérisé sur les plantes, dans lequel le liquide comprend de l'eau et des quantités appropriées de prohexadione et d'éthéphon,
dans lequel la quantité de prohexadione est comprise entre 20 et 200 g/ha dans lequel la quantité d'éthéphon est comprise entre 100 et 325 g/ha.

2. Procédé selon la revendication 1, dans lequel la culture à grande échelle est choisie parmi les cultures de colza, de lin ou de céréales.

3. Procédé selon la revendication 2, dans lequel, si la culture est une céréale, la céréale est choisie parmi l'orge, l'avoine, le blé, le seigle, le triticale, le grain ou le maïs.

4. Procédé selon la revendication 2, dans lequel la culture est du colza.

5. Procédé selon l'une quelconque des revendications 1 à 4, dans lequel la quantité de prohexadione est comprise entre 50 et 200 g/ha.

6. Procédé selon l'une quelconque des revendications 1 à 5, dans lequel la quantité d'éthéphon est comprise entre 150 et 325 g/ha.

7. Procédé selon l'une quelconque des revendications 1 à 6, dans lequel le rapport pondéral entre le prohexadione et l'éthéphon est compris entre 1:1 et 1:20, de préférence entre 1:2 et 1:10.

8. Procédé selon l'une quelconque des revendications 1 à 7, dans lequel une quantité de liquide de pulvérisation d'environ 30 L à environ 500 L est pulvérisée par hectare, de préférence de 100 L à 500 L par hectare.

9. Procédé selon l'une quelconque des revendications 1 à 8, dans lequel le liquide de pulvérisation comprend en outre un ou plusieurs éléments parmi des régulateurs de croissance végétale, des fongicides, des composés métalliques, des agents pénétrants et des jasmonates.

10. Procédé selon l'une quelconque des revendications 1 à 9, dans lequel le liquide de pulvérisation comprend un composé aminé aliphatique et/ou un sel d'ammonium et/ou un acide carboxylique.

11. Liquide de pulvérisation à base d'eau convenant au procédé selon l'une quelconque des revendications 1 à 10, dans lequel le liquide comprend de l'eau et des quantités appropriées de prohexadione et d'éthéphon comme décrit dans la revendication 1 et/ou une ou plusieurs autres limitations comme décrit dans l'une quelconque des revendications 5 à 10.

12. Utilisation d'éthéphon et de prohexadione ensemble pour améliorer l'effet de régulation de la croissance végétale de l'un ou l'autre des actifs seuls dans une culture à grande échelle, dans laquelle la quantité de prohexadione est inférieure à 200 g/ha, et dans laquelle la quantité d'éthéphon est de 325 g/ha ou moins.

13. Système de régulation de la croissance des plantes convenant à une culture à grande échelle, comprenant une combinaison synergique de prohexadione et d'éthéphon, dans lequel la quantité appliquée de prohexadione est inférieure à 200 g/ha et la quantité d'éthéphon est de 325 g/ha ou moins.
